# EUROPEAN PATENT APPLICATION

(11) **EP 3 469 906 A1**
(43) Date of publication of application: **17.04.2019**
(21) Application number: 17196688.0
(22) Date of filing: 16.10.2017
(51) Int. Cl.: A01N 37/02, A01N 47/36

(54) **SYNERGISTICALLY EFFECTIVE HERBICIDE COMPOSITION COMPRISING PELARGONIC ACID AND FLAZASULFURON**

(71) Applicant: Belchim Crop Protection NV, 1840 Londerzeel (BE)
(72) Inventor: Desnouck, Johan, 1840 Londerzeel (BE); Van Pottelberge, Steven, 1840 Londerzeel (BE); Nguyen, Caroline, 1840 Londerzeel (BE)
(74) Representative: Brantsandpatents bvba

(57) **Abstract**

The current invention concerns a synergistically effective herbicide composition comprising as component (A) an herbicidally active amount of pelargonic acid and as component (B) flazasulfuron, wherein a weight ratio of components (A) and (B) is in a range up to 1000:1.

The invention further concerns a kit comprising pelargonic acid and flazasulfuron and a use of a herbicide composition according to the invention for controlling unwanted vegetation

## Description

### TECHNICAL FIELD

The invention relates to a synergistically effective herbicide composition comprising pelargonic acid and flazasulfuron, to a kit comprising pelargonic acid and flazasulfuron and to a use of a herbicide composition according to the invention for controlling unwanted vegetation.

### BACKGROUND

In the prior art, herbicides comprising acetolactate synthase (ALS) inhibitors are known. The herbicidal activity of such herbicides against unwanted vegetation is already on a high level, but generally depends on the application rate, the respective preparation form, the respective unwanted vegetation to be controlled or the spectrum of unwanted vegetation, the climatic and soil conditions, etc. Thus, there is frequently a need for targeted synergistic activity against specific species of unwanted vegetation, control of unwanted vegetation with better overall selectivity, generally lower amounts of active compounds used for equally good control results and for a reduced active compound input into the environment to avoid, for example, leaching and carry-over effects. However, in the combined use of a plurality of active compounds, there are frequently phenomena of chemical, physical or biological incompatibility, for example decomposition of an active compound or antagonism in the biological activity of the active compounds.

US9609865B2 discloses a herbicide combination containing at least pelargonic acid and at least one ALS inhibitor chosen from the group of iodosulfuron-methyl, foramsulfuron, mesosulfuron-methyl, flazasulfuron, amidosulfuron, ethoxysulfuron and thiencarbazone-methyl. US9609865B2 shows the problem that weight ratios of pelargonic acid and specific ALS inhibitors are not always optimally chosen, as is the case for flazasulfuron, resulting in the absence of or suboptimal synergistic effects.

The present invention aims to resolve at least some of the problems mentioned above. It is furthermore an object of the present invention to provide herbicide compositions as alternatives to the prior art, or as an improvement thereof.

### SUMMARY OF THE INVENTION

A first aspect of the present invention provides a synergistically effective herbicide composition comprising as component (A) an herbicidally active amount of pelargonic acid and as component (B) flazasulfuron, wherein a weight ratio of components (A) and (B) is in a range up to 1000:1.

In the herbicide composition according to the first aspect of the present invention, flazasulfuron has shown an unexpected increase in herbicidal activity when combined with pelargonic acid. This increase in herbicidal activity is caused by a synergistic effect when combining flazasulfuron and pelargonic acid according to said weight ratio.

A second aspect of the present invention provides a kit comprising one or more spatially separated components to be used as a herbicide composition, comprising as component (A) an herbicidally active amount of pelargonic acid and as component (B) flazasulfuron, which components are for simultaneous, separate or sequential use.

A third aspect of the present invention provides a use of a herbicide composition according to the first aspect of the present invention for controlling unwanted vegetation.

### DETAI LED DESCRI PTI ON OF THE I NVENTI ON

The recitation of numerical ranges by one or two endpoints includes all numbers and fractions subsumed within that range, as well as the recited one or two endpoints.

The term 'unwanted vegetation', as used herein, refers to all plants, such as, for example, broad-leaved weeds, weed grasses or cyperaceae, which grow at sites where they are unwanted.

The term 'safener', as used in this text, is to be understood as a compound or a mixture of compounds which compensates for, or reduces, the phytotoxic properties of a herbicide towards useful plants without substantially reducing the herbicidal action against unwanted vegetation.

A compound from the substance class of the acetolactate synthase (ALS) inhibitors inhibits the enzyme acetolactate synthase (ALS) which is responsible for the biosynthesis of branched amino acids such as L-valine, L-leucine and L-isoleucine. Therefore, this substance class-in addition to other substance classes-is, according to its mechanism of action, assigned to the group of the ALS (acetolactate synthase) inhibitors (see also http://hracglobal.com/files/moaposter.pdf). The ALS inhibitors include, for example, the sulfonylureas (see also, for example, "The Pesticide Manual" 15th, Edition, British Crop Protection Council 2011). These herbicides are in particular frequently applied on fields cultivated with soybeans and cereals. Uptake of these herbicides is via the roots and leaves.

The herbicidal activity of such herbicides against unwanted vegetation (among which broad-leaved weeds, weed grasses, cyperaceae) is already on a high level, but generally depends on the application rate, the respective preparation form, the respective unwanted vegetation to be controlled or the spectrum of unwanted vegetation, the climatic and soil conditions, etc. Further criteria in this context are duration of action, or the breakdown rate, of the herbicide, the general crop plant compatibility and speed of action (more rapid onset of action), the activity spectrum and behavior toward follower crops (replanting problems) or the general flexibility of application (control of unwanted vegetation in their various growth stages). If appropriate, changes in the susceptibility of unwanted vegetation, which may occur on prolonged use of the herbicides or in limited geographical regions (control of tolerant or resistant species of unwanted vegetation), may also have to be taken into account. The compensation of losses in action in the case of individual plants of unwanted vegetation by increasing the application rates of the herbicides is only possible to a certain degree, for example because such a procedure reduces the selectivity of the herbicides or because the action is not improved, even when applying higher rates.

Thus, there is frequently a need for targeted synergistic activity against specific species of unwanted vegetation, control of unwanted vegetation with better overall selectivity, generally lower amounts of active compounds used for equally good control results and for a reduced active compound input into the environment to avoid, for example, leaching and carry-over effects. There is also a need for developing one-shot applications to avoid labor-intensive multiple applications, and also to develop systems for controlling the rate of action, where, in addition to an initial rapid control of unwanted vegetation, there is also a slow, residual control.

A possible solution to the problems mentioned above may be to provide combined herbicide compositions, that is combinations of a plurality of herbicides and/or other components from the group of the agrochemically active compounds of a different type and of formulation auxiliaries and additives customary in crop protection which contribute the desired additional properties. However, in the combined use of a plurality of active compounds, there are frequently phenomena of chemical, physical or biological incompatibility, for example decomposition of an active compound or antagonism in the biological activity of the active compounds. For these reasons, potentially suitable combinations of active compounds have to be selected in a targeted manner and tested experimentally for their suitability, it not being possible to safely discount a priori negative or positive results.

A first aspect of the present invention provides a synergistically effective herbicide composition comprising as component (A) an herbicidally active amount of pelargonic acid and as component (B) flazasulfuron, wherein a weight ratio of components (A) and (B) is in a range up to 1000:1, more preferably up to 900:1, more preferably up to 880:1, more preferably up to 700:1, more preferably up to 570:1, more preferably up to 540:1, even more preferably up to 510:1, yet even more preferably up to 480:1, and yet even more preferably up to 450:1. In preferred embodiments, said weight ratio of components (A) and (B) is in a range up to 200:1, more preferably up to 199:1, even more preferably up to 170:1, even more preferably up to 145:1, yet even more preferably up to 120:1, and yet even more preferably up to 115:1.

In preferred embodiments, said herbicide composition is diluted in water according to a target density from 0.84 to 0.99 g/cm³, more preferably from 0.86 to 0.97 g/cm³, even more preferably from 0.88 to 0.95 g/cm³ and yet even more preferably from 0.90 to 0.93 g/cm³.

In the herbicide composition according to the first aspect of the present invention, flazasulfuron has shown an unexpected increase in herbicidal activity when combined with pelargonic acid. This increase in herbicidal activity is caused by a synergistic effect when combining flazasulfuron and pelargonic acid according to said weight ratio. Flazasulfuron and pelargonic acid interact in a particularly favorable manner, for example when they are employed for controlling unwanted vegetation in sown and/or planted crop plants, greens/lawns, in fruit plantations (plantation crops) or on non-crop areas (e.g. squares of residential areas or industrial sites, rail tracks). Surprisingly, the activity of the combination according to the invention of two active compounds, when used against unwanted vegetation, is higher than the activities of the individual components. A true synergistic effect which could not have been predicted therefore exists, not just a complementation of action (additive effect). For controlling unwanted vegetation, it is particularly advantageous to apply said herbicide composition according to the first aspect of the present invention in diluted form in water, according to above mentioned target density values.

Flazasulfuron (IUPAC name: 1-(4,6-dimethoxypyrimidin-2-yl)-3-(3-trifluoromethyl-2-pyridylsulfonyl)urea) is an acetolactate synthase (ALS) inhibitor. Pelargonic acid (nonanoic acid) is a saturated fatty acid or carboxylic acid derived from the alkane n-nonane. It is an alkanoic acid which is liquid under standard conditions and is herbicidally active. Pelargonic acid belongs to the family of fatty acids derived from the vegetal world, and is therefore a natural product. For example, pelargonic acid can be extracted from *Pelargonium* species. Preference is given according to the invention to using pelargonic acid in unhydrolyzed form.

Said synergistic effect of flazasulfuron and pelargonic acid can be observed, for example, in the case of a ready-mix application, for example as a ready-to-use (RTU) formulation, emulsifiable concentrate (EC) formulation, microemulsifiable concentrate, oil dispersion (OD) formulation, wettable powder (WP) formulation, water dispersible granule (WG), water soluble granule (SG) formulation, the latter in the case when an appropriate salt of pelargonic acid is used instead of the acid form, and in the case of a co-formulation or as a tank mix; however, they can also be observed when the active compounds are applied at different times (splitting) (packed, for example, as combipack or monodoses). It is also possible to apply the herbicides or the herbicide composition in a plurality of portions (sequential application), for example post-emergence applications or early post-emergence applications followed by medium or late post-emergence applications. Substances attracting protons (fatty acids, among others) destabilize sulfonylureas. This means that sulfonylureas and fatty acids cannot, or only with great difficulties, be formulated together as a solo formulation, which requires certain demands with regard to the packaging of the crop protection composition to be met. If fatty acids and sulfonylurea are to be applied as tank mixes, it has to be ensured that the spray liquor is applied relatively quickly after preparation.

The synergistic effects permits a reduction of the application rates of the individual herbicides pelargonic acid and flazasulfuron, a higher and/or longer efficacy at the same application rate, the control of species which were as yet uncontrolled (gaps), control of species which are tolerant or resistant to individual herbicides or to a number of herbicides, an extension of the period of application and/or a reduction in the number of individual applications required and-as a result for the user-unwanted vegetation control systems which are more advantageous economically and ecologically.

Although pelargonic acid has proven most efficiently in the herbicide composition according to the first aspect of the present invention, alternative embodiments provide other herbicide compositions that are formulated by applying at least one other herbicidal active fatty acid in addition to or instead of pelargonic acid. Relative amounts of such fatty acids with regard to flazasulfuron, or alternative ALS inhibitors, may be included within the ranges disclosed above, or may be situated within other or broader ranges. Said at least one other herbicidal active fatty acid is preferably selected from the group comprising caprylic acid, capric acid, undecanoic acid, 10-undecenoic acid, lauric acid, myristic acid, palmitic acid, oleic acid, soybean fatty acids, cotton fatty acids, coconut fatty acids and other naturally occurring fatty acid mixtures, or any mixtures thereof. In other alternative embodiments, said at least one other herbicidal active fatty acid is selected from the group comprising caprylic and capric acids or mixtures of caprylic, pelargonic, capric and lauric acids, and a mixture of non-saponified caprylic acid and capric acid, e.g. at a 1.5:1 ratio, and is more preferably selected from caprylic, and capric acids.

Although flazasulfuron has proven most efficiently in the herbicide composition according to the first aspect of the present invention, alternative embodiments provide other herbicide compositions that are formulated by applying at least one other ALS inhibitor in addition to or instead of flazasulfuron. Relative amounts of such ALS inhibitors with regard to pelargonic acid, or alternatively other herbicidal active fatty acids, may be included within the ranges disclosed above, or may be situated within other or broader ranges. Said at least one other ALS inhibitor is preferably selected from sulfonylurea and/or sulfonamide ALS inhibitors and is more preferably selected from the group comprising iodosulfuron-methyl (IUPAC name: 4-iodo-2-[(4-methoxy-6-methyl-1,3,5-triazin-2-yl)carbamoylsulfamoyl]benzoate, sodium salt), foramsulfuron (IUPAC name: 1-(4,6-dimethoxypyrimidin-2yl)-3-(2-dimethylcarbamoyl-5-formamidophenylsulfonyl)urea, mesosulfuron-methyl (IUPAC name: methyl 2-[(4,6-dimethoxypyrimidin-2-ylcarbamoyl)sulfamoyl]-a-(methanesulfonamido)-p-toluate), amidosulfuron (IUPAC: 3-(4,6-dimethoxypyrimidin-2-yl)-1-(N-methyl-N-methylsulfonylaminosulfonyl)urea), ethoxysulfuron (IUPAC name: 2-ethoxyphenyl[(4,6-dimethoxypyrimidin-2-yl)carbamoyl]sulfamate), and thiencarbazone methyl (IUPAC name: methyl 4-[(4,5-dihydro-3-methoxy-4-methyl-5-oxo-1H-1,2,4-triazol-1yl)carbonylsulfamoyl]-5-methylthiophene-3-carboxylate).

In a preferred embodiment, the present invention provides a herbicide composition according to the first aspect of the invention, wherein pelargonic acid is present in its free acid form, thus present as a non-saponified fatty acid and furthermore not as a fatty acid salt.

In a preferred embodiment, the present invention provides a herbicide composition according to the first aspect of the invention, wherein said pelargonic acid is obtained from an oxidative cleavage process of vegetable oils, or a mixture of vegetable oils comprising triglycerides which comprise oleic acid and erucic acid. Such oxidative cleavage process results in high yields of pelargonic acid as satured monocarboxylic acid, and is described in WO2011080296A1 Such pelargonic acid is obtained from vegetable oils and thus can be considered as a natural, biologically based, or, in other words, bio-based, pelargonic acid. Such bio-based pelargonic acid is environmentally friendly, which is of great importance for human health and the preservation of ecosystems.

The composition of this invention can be formulated in conventional manner, for example by mixing pelargonic acid and flazasulfuron with appropriate auxiliaries. Suitable auxiliaries will depend upon such factors as the type of formulation and the end use. Suitable auxiliaries are commonly available and will be known to the person skilled in the art.

In a preferred embodiment, the present invention provides a herbicide composition according to the first aspect of the invention, further comprising one or more additional components selected from the group comprising other pesticides such as herbicides, insecticides, fungicides or other active pesticide ingredients, safeners, antioxidants, chemical stabilizers, adhesives, fertilizers, perfumes, humectants, such as, for example, propylene glycol, and dyestuffs. According to preferred embodiments, the herbicide composition can also comprise various agrochemically active compounds, for example from the group of the acaricides, nematicides, bird repellants, and soil structure improvers.

In the herbicide combination according to the invention, the application rate of the pelargonic acid may vary within a wide range; for example, the application rate should be at least 2500 g of AS/ha (hereinbelow, AS/ha means "active substance per hectare"= based on 100% active compound), but preferably between 2500 and 30000 g of AS/ha, more preferably between 3000 and 15000 g of AS/ha and most preferably between 4000 and 8000 g of AS/ha.

In the herbicide combination according to the invention, the application rate of flazasulfuron may vary within a wide range, for example between 1 g and 200 g of AS/ha, and preferably in a range from 10 to 60 g of AS/ha, with a relatively wide spectrum of unwanted vegetation being controlled.

In a most preferred embodiment, the herbicide composition according to the first aspect of the present invention is provided as a tank mixture, wherein pelargonic acid and flazasulfuron are combined prior to use, in which said pelargonic acid is present in a concentration of 580 to 850 g/L water, even more preferably 630 to 800 g/L water, and yet even more preferably 660 to 770 g/L water, and in which said flazasulfuron is present in a concentration of 1.5 to 3.5 g/L water, even more preferably 2 to 3 g/L water, and yet even more preferably 2,3 to 2,7 g/L water.

The herbicide composition according to the first aspect of the present invention has very good herbicidal properties and can be used for controlling unwanted vegetation. Here, unwanted vegetation is understood to mean all plants which grow at sites where they are unwanted.

The herbicide composition according to the first aspect of the present invention can be used, for example, in connection with the following unwanted vegetation:
- Dicotyledonous weeds of the genera: *Cassia, Erigeron, Sinapis, Lepidium, Galium, Stellaria, Matricaria, Geranium, Anthemis, Galinsoga, Chenopodium, Urtica, Senecio, Amaranthus, Erodium, Portulaca, Xanthium, Convolvulus, Ipomoea, Polygonum, Malva, Sesbania, Ambrosia, Cirsium, Carduus, Sonchus, Anagallis, Solanum, Rorippa, Rotala, Lindernia, Lamium, Veronica, Oxalis, Abutilon, Emex, Datura, Viola, Galeopsis, Papaver, Centaurea, Trifolium, Ranunculus, Sphenoclea, Taraxacum, Plantago, Epilobium, Rubus, Achillea, Rumex, Lotus, Bellis.*
- Monocotyledonous weeds of the genera: *Echinochloa, Eriochloa, Setaria, Panicum, Digitaria, Phleum, Poa, Festuca, Eleusine, Brachiaria, Lolium, Bromus, Avena, Hordeum, Cyperus, Sorghum, Agropyron, Cynodon, Monochoria, Fimbristylis, Sagittaria, Eleocharis, Scirpus, Paspalum, Ischaemum, Dactyloctenium, Agrostis, Alopecurus, Apera, Aegilops, Phalaris.*
- Mosses and algae

If the herbicide composition is applied post-emergence to the green parts of the unwanted vegetation, growth likewise stops drastically a very short time after the treatment, and the unwanted vegetation remains at the growth stage of the point of time of application, or they die completely after a certain time, so that in this manner infestation of unwanted vegetation is eliminated very early and in a sustained manner.

In a preferred embodiment, the herbicide composition according to the first aspect of the present invention is applied during the initial development stage of unwanted vegetation and is reapplied at a specified time interval of 3 days to 10 days, more preferably 4 to 8 days, and even more preferably 5 to 7 days, as from the initial development stage of the unwanted vegetation and this until the full floral development stage of the plant.

In an embodiment, the herbicide composition according to the first aspect of the present invention can be used as total herbicide for controlling unwanted vegetation, for example in particular on non-crop areas such as paths, squares and also under trees and shrubs, rail tracks etc. The herbicide composition according to the first aspect of the present invention is distinguished by an action which has a particularly quick onset and lasts for a long time.

The herbicide composition according to the first aspect of the present invention can be prepared by known processes, for example as mixed formulations or emulsifiable concentrate (EC) formulations of the individual components, if appropriate with further active compounds, additives and/or customary formulation auxiliaries, which combinations are then applied in a customary manner diluted with water, or as tank mixes by dilution of components, formulated separately or formulated partially separately, with water. Also possible is the split application of the separately formulated or partially separately formulated individual components. It is also possible to use pelargonic acid or flazasulfuron or the herbicide combination in a plurality of portions (sequential application), for example by the post-emergence method or early post-emergence applications followed by medium or late post-emergence applications.

A preferred variant of the invention relates to processes for controlling weeds where component (A) and component (B) of the herbicide combination according to the invention are mixed only shortly before application onto the unwanted vegetation and/or their habitat. According to the invention, "shortly before application" means that component (A) and component (B) are mixed preferably less than 6 hours, more preferably less than 3 hours and even more preferably less than 1 hour before application onto the unwanted vegetation and/or their habitat.

Other than that, the pelargonic acid and flazasulfuron provided in accordance with the first aspect of the present invention can be converted together or separately into customary formulations, such as solutions, emulsions, suspensions, powders, foams, pastes, granules, aerosols, natural and synthetic materials impregnated with active compound and microencapsulations in polymeric materials. The formulations may comprise the customary auxiliaries and additives.

These formulations are produced in a known manner, for example by mixing the active compounds with extenders, i.e. liquid solvents, pressurized liquefied gases and/or solid carriers, optionally with use of surfactants, i.e. emulsifiers and/or dispersants and/or foam formers.

If the extender used is water, it is also possible to use, for example, organic solvents as auxiliary solvents. Suitable liquid solvents are essentially: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example mineral oil fractions, mineral and vegetable oils, such as soybean oil, alcohols such as butanol or glycol and the ethers and esters thereof, ketones such as acetone, methyl ethyl ketone, methyl isobutyl ketone or cyclohexanone, strongly polar solvents such as dimethylformamide or dimethyl sulfoxide, and water.

Useful solid carriers include: for example ammonium salts and ground natural minerals, such as kaolins, clays, talc, chalk, quartz, attapulgite, montmorillonite or diatomaceous earth, and ground synthetic minerals, such as finely divided silica and hydrophobic silica, alumina and silicates; useful solid carriers for granules include: for example crushed and fractionated natural rocks, such as calcite, marble, pumice, sepiolite, dolomite and synthetic granules of inorganic and organic flours, and granules of organic material, such as sawdust, coconut shells, corn cobs and tobacco stalks; useful emulsifiers and/or foam formers include: for example non-ionic and anionic emulsifiers, such as polyoxyethylene fatty acid esters, polyoxyethylene fatty alcohol ethers, e.g. alkylaryl polyglycol ethers, alkylsulfonates, alkylsulfates, arylsulfonates and protein hydrolyzates; useful dispersants include: for example lignosulfite waste liquors and methylcellulose.

In the formulations, it is possible to use tackifiers such as carboxymethylcellulose, natural and synthetic polymers in the form of powders, granules or latices, such as gum arabic, polyvinyl alcohol and polyvinyl acetate, or else natural phospholipids such as cephalins and lecithins and synthetic phospholipids. Further additives may be mineral and vegetable oils.

It is possible to use colorants such as inorganic pigments, for example iron oxide, titanium oxide and Prussian blue, and organic colorants such as alizarin colorants, azo colorants and metal phthalocyanine colorants, and trace nutrients such as salts of iron, manganese, boron, copper, cobalt, molybdenum and zinc.

In general, the formulations comprise between 0.1 and 95% by weight of active compound, preferably between 0.2 and 90% by weight.

The herbicide composition according to the invention can be used as such, in the form of its formulations or in the use forms prepared therefrom by further dilution, such as ready-to-use solutions, suspensions, emulsions, powders, pastes and granules. Application is accomplished in a customary manner, for example by watering, spraying, atomizing, sprinkling, showering, spritzing, spreading in droplets, spattering, dispersing, diffusing or broadcasting.

The herbicide composition according to the invention can be applied in the form of finished formulations. However, the active compounds contained in the herbicide composition can, as individual formulations, also be mixed prior to use, i.e. be applied in the form of tank mixes.

A second aspect of the present invention provides a kit comprising one or more spatially separated components to be used as a herbicide composition, comprising as component (A) an herbicidally active amount of pelargonic acid and as component (B) flazasulfuron, which components are for simultaneous, separate or sequential use.

In a preferred embodiment, the present invention provides a kit according to the second aspect of the invention, comprising one or more spatially separated components according to the herbicide composition according to the first aspect of the present invention.

A third aspect of the present invention provides a use of a herbicide composition according to the first aspect of the present invention for controlling unwanted vegetation. In a preferred embodiment of this use according to the third aspect of the present invention, the herbicide composition according to the first aspect of the present invention is applied in a target dose rate of 4 to 12 liter per hectare of land, more preferably 6 to 10 liter per hectare of land, and even more preferably 7 to 9 liter per hectare of land.

The good herbicidal action of the herbicide composition according to the present invention can be seen from the examples which follow. While the individual active compounds show weaknesses in their herbicidal action, all combinations show a very good action on weeds which exceeds a simple sum of actions.

A synergistic effect in herbicides is always present when the herbicidal action of the active compound combination exceeds the action of the active compounds when applied individually.

The expected activity of a given combination of two or three herbicides can be calculated as follows according to a calculation method by Colby (cf. COLBY, S. R.: "Calculating synergistic and antagonistic responses of herbicide combinations", Weeds 15, pages 20-22, 1967):
If X=% damage by herbicide (A) at an application rate of m g/ha,
Y=% damage by herbicide (B) at an application rate of n g/ha,
E=the expected damage by herbicides (A) and (B) at application rates of m and n kg/ha and,
then for a combination:
   E = X + Y - (X × Y)/ 100

If the actual damage exceeds the calculated value, the activity of the combination is superadditive, i.e. it shows a synergistic effect. In this case, the damage actually observed must exceed the values calculated using the above formulae for the expected damage E.

### EXAMPLES

The invention is further described by the following non-limiting examples which further illustrate the invention, and are not intended to, nor should they be interpreted to, limit the scope of the invention.

### EXAMPLES 1-5

Herbicidal activity of a herbicide composition according to the first aspect of the present invention with regard to several types of unwanted vegetation is shown in Tables 1-5. Individual compositions comprising pelargonic acid or flazasulfuron are compared with a herbicide composition according to the invention comprising pelargonic acid and flazasulfuron. The expected activity of the combination of the active compounds pelargonic acid and flazasulfuron is calculated according to above mentioned calculation method by Colby, in order to evaluate a synergistic effect between pelargonic acid and flazasulfuron. If the actual herbicidal activity exceeds the calculated value, the activity of the combination is superadditive, i.e. it shows a synergistic effect.

Herbicidal activity was determined by performing a post-emergence test. Pelargonic acid and flazasulfuron were applied as a tank mixture by mixing these active compounds prior to use in a spray tank. The corresponding mixture was in the form of a spray liquor. Besides, spray liquors of individual compositions comprising pelargonic acid or flazasulfuron were used. Test plants of unwanted vegetation of a height of 5 to 15 cm were sprayed with the active compound preparations such that particular desired amounts of active compounds are applied per unit area.

For Example 1, shown below in Table 1, the concentration of the spray liquor is chosen such that particular desired amounts of active compounds are applied in 8 L/ha. For Examples 2 and 3, shown below in Tables 2 and 3, the concentration of the spray liquor is chosen such that particular desired amounts of active compounds are applied in 16 L/ha. For Examples 4 and 5, shown below in Tables 4 and 5, the concentration of the spray liquor is chosen such that particular desired amounts of active compounds are applied in 32 L/ha. For Examples 1-5, after 3 to 72 days after application of the spray liquor, the degree of damage to the unwanted vegetation is rated in % of plants of unwanted vegetation that were killed. Tests were performed on test fields (field trials) or in pots (pot trials).

For the herbicide combinations according to the first aspect of the invention shown in Examples 1-5, synergistic actions are observed. Synergistic actions could even be observed for a herbicide combination comprising pelargonic acid and flazasulfuron in a weight ratio below 200:1 (Example 1). When taking into account the observed synergistic actions, the environmental loading will be less when applying tank mixtures of pelargonic acid and flazasulfuron compared to applying individual compositions. The latter is especially applicable to the lower weight ratios.

**Table 1 Test results of Example 1, showing herbicidal effect of a herbicide composition according to the first aspect of the present invention comprising pelargonic acid and flazasulfuron, compared with herbicide compositions comprising pelargonic acid or flazasulfuron**

| Unwanted vegetation / Days (d) of action / Field trial (FT) or pot trial (PT) | Pelargonic acid 5440 g of active compound/ha herbicidal effect (%) | Flazasulfuron 50 g of active compound/ha herbicidal effect (%) | Expected herbicidal effect (%) of the combination of the active compounds pelargonic acid and flazasulfuron calculated according to Colby | Herbicidal effect (%) found for the composition comprising pelargonic acid and flazasulfuron |
|---|---|---|---|---|
| *Echinochloa crusgalli* / 3 d / FT | 51.3 | 2.5 | 52.5 | 60 |
| *Echinochloa crusgalli* / 7 d / FT | 30.8 | 13.3 | 40.0 | 72.8 |
| *Echinochloa* | 5 | 37.3 | 40.4 | 81 |
| *crusgalli* /12 d / FT | | | | |
| *Echinochloa crusgalli* / 26 d / FT | 0 | 99 | 99 | 99.8 |
| *Echinochloa crusgalli* / 72 d / FT | 0 | 96.3 | 96.3 | 98.8 |
| *Digit aria sang* / 3 d / FT | 51.3 | 2.5 | 52.5 | 60 |
| *Digit aria sang* / 7 d / FT | 30.8 | 13.3 | 40.0 | 72.8 |
| *Digit aria sang* / 12 d / FT | 5 | 37.3 | 40.4 | 81 |
| *Digit aria sang* / 72 d / FT | 0 | 3.8 | 3.8 | 4.5 |
| *Lolium sp.* / 7 d / FT | 18.8 | 2.5 | 20.83 | 25 |
| *Sonchus oleraceus L.* / 3 d / FT | 2.5 | 0 | 2.5 | 16.3 |
| *Sonchus oleraceus L.* / 7 d / FT | 1.3 | 0 | 1.3 | 21.3 |
| *Sonchus oleraceus L.* / 13d / FT | 3.8 | 2.5 | 6.2 | 27.5 |
| *Sonchus oleraceus L.* / 28 d / FT | 1.3 | 12.5 | 13.6 | 27.5 |
| *Sonchus oleraceus L.* / 58 d / FT | 0 | 10 | 10 | 30 |
| *Convolvulus arvensis L.* / 3d/FT | 11.3 | 0 | 11.3 | 17.5 |
| *Veronica persica* / 3 d / FT | 8.8 | 2.5 | 11.1 | 17.5 |
| *Veronica persica* / *7 d* / *FT* | 20 | 7.5 | 26 | 27.5 |
| *Veronica persica* / *56 d* / FT | 16.3 | 16.3 | 29.9 | 30 |
| *Anagallis arvensis* / 3 d / FT | 13.8 | 1.3 | 14.9 | 18.8 |
| *Erodium cicuta* / 28 d / FT | 82.5 | 95 | 99.1 | 100 |

**Table 2 Test results of Example 2, showing herbicidal effect of herbicide composition according to the first aspect of the present invention comprising pelargonic acid and flazasulfuron, compared with herbicide compositions comprising pelargonic acid or flazasulfuron**

| Unwanted vegetation / Days (d) of action / Field trial (FT) or pot trial (PT) | Pelargonic acid 10880 g of active compound/ha herbicidal effect (%) | Flazasulfuron 50 g of active compound/ha herbicidal effect (%) | Expected herbicidal effect (%) of the combination of the active compounds pelargonic acid and flazasulfuron calculated according to Colby | Herbicidal effect (%) found for the composition comprising pelargonic acid and flazasulfuron |
|---|---|---|---|---|
| *Geranium dissectum* , young plants / 28 d / PT | 32 | 8 | 37.4 | 47 |
| *Geranium dissectum*, bigger plants / 28 d / PT | 24 | 0 | 24 | 54 |
| *Setaria pumila* , young plants / 28 d / PT | 40 | 92 | 95.2 | 100 |
| *Matricaria chamomilla,* bigger plants / 28 d / PT | 0 | 2 | 2 | 9 |
| *Poa annua* / 28 d / PT | 0 | 0 | 0 | 10 |
| *Trifolium repens* / *28 d* / *PT* | 0 | 1.2 | 1.2 | 6 |
| *Chenopodium album* / 3 d / FT | 40 | 15 | 49 | 55 |
| *Chenopodium album* / 7 d / FT | 40 | 0 | 40 | 80 |
| *Chenopodium album* / 13 d / FT | 10 | 0 | 10 | 70 |
| *Chenopodium album* / 30 d / FT | 0 | 0 | 0 | 100 |
| *Chenopodium album* / 38 d / FT | 15 | 0 | 15 | 100 |
| *Echinochloa crusgalli* / 7 d / FT | 30 | 20 | 44 | 75 |
| *Echinochloa crusgalli* / 13 d / FT | 0 | 30 | 30 | 85 |
| *Echinochloa crusgalli* / 23 d / FT | 10 | 0 | 10 | 100 |
| *Festuca ovina* / 7 d / FT | 20 | 20 | 36 | 40 |
| *Festuca ovina* / 13 d / FT | 0 | 20 | 20 | 60 |
| *Festuca ovina* / 23 d / FT | 0 | 0 | 0 | 100 |
| *Plantago major* / 3 d / FT | 20 | 10 | 28 | 55 |
| *Plantago major* / 7 d / FT | 25 | 0 | 25 | 70 |
| *Plantago major* / 13 d / FT | 0 | 20 | 20 | 40 |
| *Plantago major* / 30 d / FT | 0 | 0 | 0 | 40 |
| *Plantago major* / 38 d / FT | 0 | 10 | 10 | 40 |

**Table 3 Test results of Example 3, showing herbicidal effect of a herbicide composition according to the first aspect of the present invention comprising pelargonic acid and flazasulfuron, compared with herbicide compositions comprising pelargonic acid or flazasulfuron**

| Unwanted vegetation / Days (d) of action / Field trial (FT) or pot trial (PT) | Pelargonic acid 10880 g of active compound/ha herbicidal effect (%) | Flazasulfuron 25 g of active compound/ha herbicidal effect (%) | Expected herbicidal effect (%) of the combination of the active compounds pelargonic acid and flazasulfuron calculated according to Colby | Herbicidal effect (%) found for the composition comprising pelargonic acid and flazasulfuron |
|---|---|---|---|---|
| *Geranium dissectum,* young plants / 28 d / PT | 32 | 7 | 36.8 | 64 |
| *Setaria pumila* , young plants / 28 d / PT | 40 | 89 | 93.4 | 96 |
| *Matricaria chamomilla,* bigger plants / 28 d / PT | 0 | 0 | 0 | 93 |
| *Chenopodium album* / *3 d* / *FT* | 40 | 10 | 46 | 65 |
| *Chenopodium album* / *7 d* / *FT* | 40 | 40 | 64 | 80 |
| *Chenopodium album* / *13 d* / *FT* | 10 | 15 | 23.5 | 80 |
| *Chenopodium album* / *23 d* / *FT* | 15 | 20 | 32 | 50 |
| *Chenopodium album* / *30 d* / *FT* | 0 | 20 | 20 | 95 |
| *Chenopodium album* / *38 d* / *FT* | 15 | 20 | 32 | 65 |
| *Echinochloa crusgalli* / *3 d* / *FT* | 45 | 0 | 45 | 50 |
| *Echinochloa crusgalli* / *7 d* / *FT* | 30 | 40 | 58 | 75 |
| *Echinochloa crusgalli* / *13 d* / *FT* | 0 | 40 | 40 | 70 |
| *Echinochloa crusgalli* / *23 d* / *FT* | 10 | 40 | 46 | 90 |
| *Echinochloa crusgalli* / *30 d* / *FT* | 0 | 90 | 90 | 100 |
| *Echinochloa crusgalli* / *38 d* / *FT* | 0 | 90 | 90 | 100 |
| *Festuca ovina* / 3 d / FT | 20 | 0 | 20 | 30 |
| *Festuca ovina* / 7 d / FT | 20 | 30 | 44 | 45 |
| *Festuca ovina* / 13 d / FT | 0 | 30 | 30 | 50 |
| *Festuca ovina* / 23 d / *FT* | 0 | 75 | 75 | 100 |
| *Festuca ovina* / 30 d / FT | 0 | 75 | 75 | 100 |
| *Festuca ovina* / 38 d / FT | 0 | 80 | 80 | 95 |
| *Plantago major* / 3 d / FT | 20 | 0 | 20 | 60 |
| *Plantago major* / 7 d / FT | 25 | 25 | 43.75 | 80 |
| *Plantago major* / 13 d / FT | 0 | 10 | 10 | 25 |
| *Plantago major* / 30 d / FT | 0 | 35 | 35 | 40 |
| *Plantago major* / 38 d / FT | 0 | 10 | 10 | 95 |

**Table 4 Test results of Example 4, showing herbicidal effect of a herbicide composition according to the first aspect of the present invention comprising pelargonic acid and flazasulfuron, compared with herbicide compositions comprising pelargonic acid or flazasulfuron**

| Unwanted vegetation / Days (d) of action / Field trial (FT) or pot trial (PT) | Pelargonic acid 21760 g of active compound/ha herbicidal effect (%) | Flazasulfuron 50 g of active compound/ha herbicidal effect (%) | Expected herbicidal effect (%) of the combination of the active compounds pelargonic acid and flazasulfuron calculated according to Colby | Herbicidal effect (%) found for the composition comprising pelargonic acid and flazasulfuron |
|---|---|---|---|---|
| *Chenopodium album* / 3 d / FT | 45 | 15 | 53.25 | 60 |
| *Chenopodium album* / 7 d / FT | 35 | 0 | 35 | 85 |
| *Chenopodium album* / 13 d / FT | 10 | 0 | 10 | 80 |
| *Chenopodium album* / 23 d / FT | 40 | 0 | 40 | 95 |
| *Chenopodium album* / 30 d / FT | 0 | 0 | 0 | 100 |
| *Chenopodium album* / 38 d / FT | 30 | 0 | 30 | 100 |
| *Echinochloa crusgalli* / *7 d* / *FT* | 45 | 20 | 56 | 60 |
| *Echinochloa crusgalli* / *13 d* / *FT* | 0 | 30 | 30 | 85 |
| *Echinochloa crusgalli* / *23 d* / *FT* | 10 | 0 | 10 | 100 |
| *Festuca ovina* / *7 d* / *FT* | 30 | 20 | 44 | 80 |
| *Festuca ovina* / *13 d* / *FT* | 0 | 20 | 20 | 80 |
| *Festuca ovina* / *23 d* / *FT* | 0 | 0 | 0 | 100 |
| *Plantago major* / *3 d* / *FT* | 50 | 10 | 55 | 80 |
| *Plantago major* / *7 d* / *FT* | 40 | 0 | 40 | 75 |
| *Plantago major* / *13 d* / *FT* | 0 | 20 | 20 | 60 |
| *Plantago major* / *23 d* / *FT* | 15 | 0 | 15 | 50 |
| *Plantago major* / *30 d* / *FT* | 0 | 0 | 0 | 90 |
| *Plantago major* / 38 *d* / *FT* | 0 | 10 | 10 | 60 |

**Table 5 Test results of Example 5, showing herbicidal effect of a herbicide composition according to the first aspect of the present invention comprising pelargonic acid and flazasulfuron, compared with herbicide compositions comprising pelargonic acid or flazasulfuron**

| Unwanted vegetation / Days (d) of action / Field trial (FT) or pot trial (PT) | Pelargonic acid 21760 g of active compound/ha herbicidal effect (%) | Flazasulfuron 25 g of active compound/ha herbicidal effect (%) | Expected herbicidal effect (%) of the combination of the active compounds pelargonic acid and flazasulfuron calculated according to Colby | Herbicidal effect (%) found for the composition comprising pelargonic acid and flazasulfuron |
|---|---|---|---|---|
| *Chenopodium album* / 3 d / FT | 45 | 10 | 50.5 | 60 |
| *Chenopodium album* / 7 d / FT | 35 | 40 | 61 | 80 |
| *Chenopodium album* / 13 d / FT | 10 | 15 | 23.5 | 85 |
| *Chenopodium album* / 23 d / FT | 40 | 20 | 52 | 95 |
| *Chenopodium album* / 30 d / FT | 0 | 20 | 20 | 98 |
| *Chenopodium album* / 38 d / FT | 30 | 20 | 44 | 85 |
| *Echinochloa crusgalli l 3 d* / *FT* | 50 | 0 | 50 | 55 |
| *Echinochloa crusgalli* / *13 d* / *FT* | 0 | 40 | 40 | 50 |
| *Echinochloa crusgalli* / *23 d* / *FT* | 10 | 40 | 46 | 80 |
| *Echinochloa crusgalli* / *30 d* / *FT* | 0 | 90 | 90 | 100 |
| *Echinochloa crusgalli* / *38 d* / *FT* | 0 | 90 | 90 | 100 |
| *Festuca ovina* / 3 d / FT | 45 | 0 | 45 | 50 |
| *Festuca ovina* / 7 d / FT | 30 | 30 | 51 | 60 |
| *Festuca ovina* / 13 d / FT | 0 | 30 | 30 | 80 |
| *Festuca ovina* / 23 d / *FT* | 0 | 75 | 75 | 100 |
| *Festuca ovina* / 30 d / FT | 20 | 75 | 80 | 100 |
| *Festuca ovina* /38d/ / FT | 0 | 80 | 80 | 95 |
| *Plantago major* / *7 d* / *FT* | 40 | 25 | 55 | 85 |
| *Plantago major* / *13 d* / *FT* | 0 | 10 | 10 | 40 |
| *Plantago major* / *23 d* / *FT* | 15 | 10 | 23.5 | 25 |
| *Plantago major* / 30 *d* / *FT* | 0 | 35 | 35 | 65 |
| *Plantago major* / *38 d* / *FT* | 0 | 10 | 10 | 55 |

## Claims

1. A synergistically effective herbicide composition comprising as component (A) an herbicidally active amount of pelargonic acid and as component (B) flazasulfuron, wherein a weight ratio of components (A) and (B) is in a range up to 1000:1.

2. The herbicide composition according to claim 1, wherein said weight ratio of components (A) and (B) is in a range up to 200:1.

3. The herbicide composition according to claim 1 or 2, wherein pelargonic acid is present in its free acid form.

4. The herbicide composition according to any of claims 1 to 3, wherein said pelargonic acid is obtained from an oxidative cleavage process of vegetable oils, or a mixture of vegetable oils comprising triglycerides which comprise oleic acid and erucic acid.

5. The herbicide composition according to any of claims 1 to 4, further comprising one or more additional components selected from the group comprising other pesticides such as herbicides, insecticides, fungicides or other active pesticide ingredients, safeners, antioxidants, chemical stabilizers, adhesives, fertilizers, perfumes, humectants and dyestuffs.

6. Kit comprising one or more spatially separated components to be used as a herbicide composition, comprising as component (A) an herbicidally active amount of pelargonic acid and as component (B) flazasulfuron, which components are for simultaneous, separate or sequential use.

7. Kit according to claim 6, comprising one or more spatially separated components according to the herbicide composition according to any of claims 1 to 4.

8. Use of a herbicide composition according to any of claims 1 to 5 for controlling unwanted vegetation.

9. Use according to claim 8, wherein the herbicide composition according to any of claims 1 to 5 is applied in a target dose rate of 4 to 12 liter per hectare of land.
